# EUROPEAN PATENT APPLICATION

(11) **EP 4 197 692 A1**
(43) Date of publication of application: **21.06.2023**
(21) Application number: 21214939.7
(22) Date of filing: 15.12.2021
(51) Int. Cl.: B23P 15/52, B23G 1/00, B24B 3/18, B24B 31/00, B24B 31/02, B24C 1/10, C21D 7/06, B24B 19/04

(54) **THREAD CUTTING TAP AND METHOD FOR TREATMENT OF A THREAD CUTTING TAP**

(71) Applicant: AB Sandvik Coromant, 811 81 Sandviken (SE)
(72) Inventor: CORONEL, Ernesto, 811 81 Sandviken (SE); GADDAM, Raghuveer, 811 81 Sandviken (SE); BLURTSYAN, David, 811 81 SANDVIKEN (SE)
(74) Representative: Sandvik

(57) **Abstract**

The invention relates to treatment of a thread cutting tap (1) comprising a thread cutting portion (2) including a plurality of cutting lands (3) separated by flutes (4), wherein the thread cutting portion (2) comprises a chamfered section (5) extending from a front end (7) of the thread cutting tap (1) to a full profile section (6) extending from the chamfered section (5) towards a rear end (8) of the thread cutting tap (1). Each cutting land (3) comprises one or more thread cutting teeth (9) in the chamfered section (5) and a plurality of thread cutting teeth (9') in the full profile section (6), and each thread cutting tooth (9, 9') includes a primary cutting edge. The method comprises
- immersing at least the thread cutting portion (2) of the thread cutting tap (1) in a bed of granules and effectuating relative movement between the thread cutting portion and the granules for removing grinding burr and generating an edge rounding of a first magnitude at the primary cutting edge of each thread cutting tooth (9, 9'); and then
- exposing a subset of the thread cutting teeth (9, 9') to a dynamic plastic deformation treatment, the subset including at least all the thread cutting teeth (9) in the chamfered section (5), such as to generate an edge rounding of a second magnitude, greater than the first magnitude, at the primary cutting edge of each thread cutting tooth in the subset.

The invention also relates to a thread cutting tap produced by such method.

## Description

### TECHNICAL FIELD

The invention relates to tools for metal cutting, and in particular tools for machining threaded holes.

### BACKGROUND ART

Thread taps are used for machining internal threads in holes. A thread cutting tap has a plurality of thread cutting teeth arranged on cutting lands separated by flutes. The cutting teeth engage the internal surface of a hole in a metal workpiece such as to cut away material in a spiraling path along the extension of the hole, thereby creating the internal thread. The front part of the thread cutting tap is usually chamfered, i.e. the tool is slightly tapered towards the front, such that the cutting diameter, i.e. the radial position at which the crest of each cutting tooth is located, is increasing from the front end towards a section of the thread cutting tap where the teeth has a "full" profile corresponding to the desired internal thread profile. In this way, a tooth at the front of the thread tap initially contacting a certain part of the surface will cut away only a small segment of the workpiece material, and the subsequently following tooth in the spiraling pattern of cutting teeth will cut away an additional segment, and so on until the full profile teeth engage the part. Thus, the teeth in the chamfered section of the thread tap will cut most of the material, and can be considered as roughing teeth, whereas the full profile teeth can be considered as finishing teeth that are supposed to cut thinner swarf and create an accurate thread with a smooth surface.

The thread cutting teeth are subjected to significant forces when cutting a thread, resulting in various types of wear at, or adjacent, the cutting edges of the cutting teeth. Therefore, the cutting edges are preferably provided with a certain edge rounding to increase the resistance to such wear.

RU261675 discloses a thread cutting tap wherein different magnitudes of edge rounding is used for different cutting teeth. According to one example, a greater edge rounding is used on teeth within the tapering front part of the tap and on teeth at the rear part, compared to teeth at an intermediate part of the thread tap. No method for obtaining the design is described. Moreover, the edge rounding values specified may not be optimal for many applications.

Accordingly, there is a need for thread cutting taps with improved wear resistance and improved methods for creating such thread cutting taps.

### SUMMARY

It is an object of the present invention to mitigate the shortcomings of the prior art and to provide a cutting tap having increased wear resistance while able to accurately cut threads of high quality with a good surface finish. Another object is to provide a method for producing such thread cutting tap.

Thus, according to a first aspect, the invention relates to a method for treatment of a thread cutting tap that comprises a thread cutting portion including a plurality of cutting lands separated by flutes. The thread cutting portion comprises a chamfered section extending from a front end of the thread cutting tap to a full profile section extending from the chamfered section towards a rear end of the thread cutting tap. Each cutting land comprises one or more thread cutting teeth in the chamfered section and a plurality of thread cutting teeth in the full profile section, and each thread cutting tooth includes a primary cutting edge. The method comprises first immersing at least the thread cutting portion of the thread cutting tap in a bed of granules and effectuating relative movement between the thread cutting portion and the granules for removing grinding burr and generating an edge rounding of a first magnitude at the primary cutting edge of each thread cutting tooth. Thereafter, a subset of the thread cutting teeth is exposed to a dynamic plastic deformation treatment, wherein the subset includes at least all the thread cutting teeth in the chamfered section, such as to generate an edge rounding of a second magnitude, greater than the first magnitude, at the primary cutting edge of each thread cutting tooth in the subset.

An increased edge rounding of the cutting edges may improve the wear resistance, in particular the resistance to primary cutting edge chipping. The chipping of a primary cutting edge is usually followed by tooth fracturing and eventually tap breakage. Thus, the increased edge rounding on the primary cutting edges of at least the teeth in the chamfered section may prolong the tool life, whereas the edge rounding of a smaller magnitude on the cutting edges of at least some of the teeth in the full profile section, cutting thinner swarf, will provide a good surface finish. Since the teeth in the full profile section are exposed to lower cutting forces compared to the teeth in the chamfered section, a smaller magnitude of edge rounding, i.e. a sharper edge, in this section is possible without compromising the tool life.

A cutting tap treated according to a method as defined above will have such different magnitudes of edge rounding for different thread cutting teeth.

To apply a dynamic plastic deformation treatment after having treated the tap by immersing it in a bed of granules for removing grinding burr may appear non-intuitive, since the latter process would usually be applied as a last surface finishing step, for example immediately before coating the tool. However, it has been found that this is an advantageous method for achieving the desired microgeometry of the cutting tap.

By removing the grinding burr before applying the dynamic plastic deformation treatment, a problem of remaining burr being bent during the plastic deformation treatment, such as to adjoin the rake or clearance sides of the cutting edges, is avoided. It has been found that a coated cutting edge with such underlying burr may not properly resist high cutting forces, resulting in loss of coating and damaged cutting edges.

A primary cutting edge of a thread cutting tooth is to be understood as the cutting edge formed at an intersection between a rake face (in the flute) and a surface (flank) of the thread cutting tooth facing forward. In other words, the primary cutting edge is, for each tooth, the edge that first enters the hole in the workpiece and engages the surface thereof for machining the flanks of the internal thread that faces the opposite direction. For a helical thread cutting tap, such primary cutting edge would normally be the leading cutting edge with respect to a rotation direction of the tap. However, a thread cutting tooth includes not only a primary cutting edge, but also a secondary cutting edge, formed at an intersection between the rake face and a surface (flank) of the thread cutting tooth facing rearward, and a crest cutting edge, the crest connecting the forward and rearward facing flanks of each cutting tooth. The step of immersing the thread cutting portion in a bed of granules would normally result in that all edges of each thread cutting tooth obtain the same edge rounding, i.e. all cutting edges of all thread cutting teeth will obtain an edge rounding of the first magnitude (as well as other edges, for example at the heels on the trailing sides of the teeth). Also after the dynamic plastic deformation treatment, all the cutting edges of the thread cutting teeth in the subset may have corresponding edge rounding magnitudes, i.e. an edge rounding of the second magnitude. However, the edge rounding magnitudes may also differ between different edges. Thus, even though the dynamic plastic deformation treatment will increase the edge rounding of all the cutting edges of each tooth in the subset, the increase is not necessarily the same for the crest and secondary cutting edge as for the primary cutting edge. The difference may for example depend on the type of dynamic plastic deformation treatment and how the treatment is applied. Hence, as an example, the edge rounding magnitude of the crest and/or secondary cutting edge of each thread cutting tooth in the subset may be greater than the first edge rounding magnitude, but smaller than the second edge rounding magnitude. Moreover, all the primary cutting edges of the teeth in the subset may not necessarily obtain the exact same edge rounding magnitude from the dynamic plastic deformation treatment. As discussed further below, the second edge rounding magnitude may be determined as an average of a plurality of edge rounding measurements within the subset.

To make sure only the subset of the thread cutting teeth is exposed to the dynamic plastic deformation treatment, a mask may be applied that covers the teeth that are not meant to be treated. Due to difficulties in arranging such mask with high precision, there may be a few teeth not included in the subset (i.e. teeth intended to be masked), that still to some extent are affected by the dynamic plastic deformation treatment. Nevertheless, the teeth affected thereby should be fewer than half of the teeth that are not included in the subset, such that at least a majority of the teeth that are not in the subset will still have an edge rounding of the first magnitude.

The dynamic plastic deformation treatment may result in a local increase of superficial microhardness of the primary cutting edge of each thread cutting tooth in the subset. This may further increase the wear resistance, including resistance to chipping and crack propagation on the primary cutting edges and resistance to flank wear on the secondary cutting edges and crests.

Hence, according to another aspect of the invention, a thread cutting tap is provided that comprises a thread cutting portion including a plurality of cutting lands separated by flutes. The thread cutting portion comprises a chamfered section extending from a front end of the thread cutting tap to a full profile section extending from the chamfered section towards a rear end of the thread cutting tap. Each cutting land comprises one or more thread cutting teeth in the chamfered section and a plurality of thread cutting teeth in the full profile section, and each thread cutting tooth includes a primary cutting edge. A plurality of the thread cutting teeth are included in a cutting teeth subset comprising at least all the thread cutting teeth in the chamfered section. The primary cutting edges of a majority of the thread cutting teeth that are not included in the subset have an edge rounding of a first magnitude and a first superficial microhardness, whereas the primary cutting edges of the thread cutting teeth included in the subset have an edge rounding of a second magnitude and a second superficial microhardness, and wherein the second magnitude and second superficial microhardness are greater than the first magnitude and the first superficial microhardness, respectively.

The cutting edges of such thread cutting tap will have optimized properties, both with respect to edge rounding and microhardness, for all its teeth. That is, at the chamfered section, where the cutting forces are the greatest, the edge rounding and microhardness is higher compared to (at least a part of) the full profile section, where the increased microhardness is not as important and where a smaller edge rounding is beneficial.

Superficial microhardness, as used herein, should be understood as a measure of the hardness in a surface layer of the material, for example as measured by indentation hardness testing, as is well-known in the art. Accordingly, such microhardness may be quantified in different ways, but, regardless of which measurement method that is used, the method according the present invention will result in a relative increase of the superficial microhardness of the primary cutting edges of the thread cutting teeth in the subset compared to the thread cutting teeth that are not included in the subset. Moreover, as used herein, a superficial microhardness should be considered as an *average* microhardness at the surface layer. The first superficial microhardness would normally correspond to the microhardness of the thread cutting portion of the tap after grinding, and would normally be the same not only at the primary cutting edges but at all parts of the thread cutting portion of the tool, although variations may occur such that a plurality of measurements are required to obtain a reliable value of the first superficial microhardness. Accordingly, the first superficial microhardness may be determined as an average of measurements, made before the dynamic plastic deformation treatment (and thus corresponding to the superficial microhardness of the primary cutting edges of a majority of the cutting teeth outside the subset), at positions distributed over the primary cutting edges such as to be representative of the entire surface. The second superficial microhardness, that is a result of a dynamic plastic deformation treatment, may vary to a greater extent on different parts of the cutting tool, and could possibly also vary to some extent between different thread cutting teeth in the subset. As for the first superficial microhardness, the second superficial microhardness should be understood as an average microhardness at the surface layer of the primary cutting edges of the thread cutting teeth in the subset, i.e. as determined based on a plurality of microhardness measurements within the subset.

In a corresponding way, the respective first and second edge rounding magnitudes may also be determined as an average of values measured at a plurality of positions on the primary cutting edges. For example, the first edge rounding magnitude may be determined based on measurements on the primary cutting edge of one or more cutting teeth in the full profile section that are not included in the subset, or based on measurements made after the treatment for removing grinding burr and generating an edge rounding of a first magnitude, but before the dynamic plastic deformation treatment.

Correspondingly, the second edge rounding magnitude may be determined based on measurements on the primary cutting edge of one or more cutting teeth in the chamfered section after having performed the dynamic plastic deformation treatment. In particular, the second edge rounding magnitude may be determined as an average edge rounding magnitude as measured on the primary cutting edges of some or all of the cutting teeth in the subset.

The thread cutting tap may have a coating of a different material covering at least the thread cutting portion. A coating deposited on the surface of the thread cutting portion would normally have a different hardness than the material underneath. Herein, any reference to a superficial microhardness is made with respect to the tool substrate, i.e. the bulk material of the thread cutting tap (for example high speed steel). In other words, any reference to a superficial microhardness is made with respect to an uncoated tap or to the substrate of a coated tap.

The dynamic plastic deformation treatment may also result in that residual compressive stresses are created in the surface of the thread cutting portion exposed to the treatment. This may also increase the wear resistance.

The thread cutting tap may include, in addition to a thread cutting portion, a shank portion located at (or near) the rear end of the thread cutting tap. Such shank portion may be mountable in a tool holder, for example arranged to a machine tool for machining a threaded hole using the thread cutting tap. The thread cutting tap may include additional parts, such as a neck portion located between the thread cutting portion and the shank. Such neck portion is not involved in the cutting process, but may include flutes in order to facilitate chip evacuation. The thread cutting portion, the neck portion and the shank may be coaxial with each other. Accordingly, the thread cutting portion may extend rearwards along a longitudinal axis of the thread cutting tap from the front end of the thread cutting tap to the shank (or to the neck portion, if such portion is located between the thread cutting portion and the shank).

The cutting lands and the flutes may extend axially along the thread cutting portion, for example following a helical path around the longitudinal axis of the thread cutting tap or following a straight path along the longitudinal axis. Accordingly, the methods described herein are applicable both with respect to thread cutting taps with helical flutes and straight fluted taps.

The thread cutting teeth of a cutting land are not located at the same axial positions as corresponding teeth of an adjacent cutting land. This is because the teeth are formed in a spiraling configuration that corresponds to the thread to be machined. Accordingly, each tooth does not extend across the cutting land in a direction perpendicular to the longitudinal axis, but at a helix angle. As a consequence, the transition between the chamfered section and the full profile section occurs at a certain point along the helical extension of the thread, either somewhere along the extension of a cutting tooth or between two consecutive cutting teeth along the helical path. For the purposes of the present disclosure, a thread cutting tooth is considered to be in the chamfered section if at least some part of the tooth is in the chamfered section. That is, if the transition between the chamfered section and the full profile section occurs at some point along the extension of a certain thread cutting tooth, that tooth is considered to be part of the chamfered section.

In the step for removing grinding burr and creating an edge rounding of a first magnitude, the thread cutting tap may be held in a shank portion thereof such that at least the thread cutting portion may be completely immersed in the bed of granules. The thread cutting tap may then be moved within the bed of granules and/or a motion of the granules with respect to the cutting portion may be effectuated, for example by rotation of the container holding the granules. The granules may be free-floating independent abrasive particles, such as, for example, particles made from organic or plastic materials impregnated with abrasive materials (e.g. silicone carbide). The bed of granules may include a liquid machining agent such as oil, water, surfactants, or the like. For example, one of the processes sometimes referred to as "drag finishing" or "stream finishing" may be used. According to such processes, the workpieces (i.e. in this case the thread cutting taps) are rotated within the bed of granules. According to a stream finishing process, both the workpieces and the container holding the granules are rotated. As an example, a machine as disclosed in US20140199922 may be used for achieving the relative movement between the thread cutting tap and the bed of granules.

As used herein, a dynamic plastic deformation treatment, or a treatment for dynamically impacting plastic deformation, is to be understood as a treatment wherein a substance is caused to hit a surface such that the impact therefrom causes a plastic deformation in the surface.

In addition to the teeth in the chamfered section, the thread cutting teeth subset may include, for each cutting land, at least the one thread cutting tooth in the full profile section being closest to the chamfered section. In other words, the subset may include, in addition to the most forwardly located thread cutting tooth of each cutting land, at least each thread cutting tooth of which the preceding thread cutting tooth axially forward thereof in the cutting land is in the chamfered section. The subset may also include additional thread cutting teeth in the full profile section, but not all of the teeth. For example, at least half of the thread cutting teeth in the full profile section may be teeth with an edge rounding of the first magnitude. Thus, according to some embodiments, at most half of the thread cutting teeth in the full profile section are included in the subset. Each thread cutting tooth in the subset, including those in the full profile section, may be located closer to the front end than any thread cutting tooth that is not included in the subset. In other words, along the longitudinal axis, each cutting tooth that is included in the subset may be located in front of any cutting tooth that is not included in the subset.

The method may further comprise a subsequent step of immersing at least the thread cutting portion of the thread cutting tap in a bed of granules and effectuating relative movement between the thread cutting portion and the granules for removing flaking particles on the surface of the thread cutting portion.

Thereby, the surface of the thread cutting portion will become smooth and better prepared for coating deposition. This subsequent step of immersing the thread cutting portion in a bed of granules may be similar to the previous step in which an edge rounding of a first magnitude was formed, but it is preferably a "softer" treatment, i.e. wherein the process parameters used, for example duration or relative speed between the thread cutting portion and the granules, or the kind (or size) of granules used, are different. As used hereinunder, this step is also referred to as a "polishing" treatment. Hence, for example, such polishing treatment may be effective for creating a smooth surface, but without significantly modifying the edge rounding of any of the cutting edges. Accordingly, this polishing treatment for removing flaking particles may correspond to a more gentle treatment compared to the preceding step for removing grinding burr and generating the edge rounding of a first magnitude.

In particular, the thickness of the material layer removed during the polishing step is preferably smaller than the depth of the residual compressive stresses created during the preceding dynamic plastic deformation treatment. Thereby, such residual compressive stresses will still remain in the surface of the thread cutting teeth included in the subset.

The treated thread cutting tap may be useable for machining a workpiece without any further modifications, i.e. the thread cutting tap may be uncoated. Alternatively, the method may comprise a further subsequent step of coating at least a part of the thread cutting tap, typically the thread cutting portion thereof. For example, such coating may be a TiN or a TiAlN PVD coating.

Further post-treatment of the coated surface may also be applied, such as, for example, fine blasting with glass beads or abrasive particles.

Accordingly, the method for treatment of a thread cutting tap may involve the following steps, in order:
- treatment for deburring and edge rounding (by immersing the thread cutting portion in a bed of granules and effectuating relative movement between the thread cutting portion and the granules);
- treatment for increasing edge rounding and superficial microhardness (by dynamically impacting plastic deformation);
   and optionally:
- treatment for polishing (by immersing the thread cutting portion in a bed of granules and effectuating relative movement between the thread cutting portion and the granules);
- coating deposition; and
- post-treatment.

Prior to treating the thread cutting tap in accordance with the disclosure herein, the thread cutting tap may have been formed by conventional means, i.e. by grinding a tool blank, for example a tool blank of high speed steel.

The dynamic plastic deformation treatment may be a process in which particles are propelled in a stream of liquid, vapor or air towards the cutting teeth in the subset. The particles may be non-abrasive, such as to result in plastic deformation but without removing material from the surface. The particles may for example be steel balls or ceramic beads. The process may comprise dry-blasting (also including micro dry blasting), in which particles are propelled in a stream of air towards the surface. However, also other processes in which particles are propelled in a stream of liquid, vapor or air are envisaged, such as, for example, shot peening (including micro shot peening). Alternatively, the dynamic plastic deformation treatment may involve other processes, such as chasing.

The thread cutting tap may be made of high speed steel. Alternatively, the thread cutting tap could be made of cemented carbide or cermet.

The second edge rounding magnitude may be 20-50% greater than the first edge rounding magnitude. In many applications, such increased edge rounding would provide a sufficient improvement in wear resistance while still retaining an adequate sharpness of the cutting edge.

For example, the first edge rounding magnitude may be between 4.5 µm and 14 µm, and the second edge rounding magnitude may be between 5,5 µm and 21 µm. The edge rounding magnitudes found to be most suitable may vary depending on tool diameter and/or target workpiece material. For small diameter tools the edge rounding is preferably smaller than for a larger tool.

The second superficial microhardness may be at least 3% greater than the first superficial microhardness, and for example 3% - 17% greater. Such increase corresponds to dynamic plastic deformation treatment that will not adversely affect the overall microgeometry of the cutting edges, but still provide a significant increase of the strength of the cutting edge.

In general, the combination of:
- a treatment for deburring and creating an initial edge rounding, in which the tool is immersed in a bed of granules and relative movement between the tool and the granules is effectuated, and
- a treatment for increasing the superficial microhardness of the tool, comprising a process for dynamically impacting plastic deformation,
has been found to be beneficial also in view of other tools for machining metal, such as thread forming taps, end mills or drills, and in particular for such tools made of high speed steel. This is because the first deburring treatment combined with initial edge rounding removes grinding burr from the cutting edges and creates a solid surface that is well prepared for plastic deformation, such that no burr will remain or be created (and potentially bend and adjoin the rake or clearance sides of the cutting edges) during the dynamic plastic deformation treatment. A cutting tool treated in this way, in particular if subsequently coated, will better resist high cutting forces.

Moreover, since desired edge rounding magnitudes on cutting edges of the tool will be produced by a two-step process, the same final edge rounding value could be reached in different ways. For example, high forces of plastic deformation may be applied at the second step to create a certain edge rounding, whereas the same magnitude of edge rounding could be reached also by creating a larger edge rounding value already at the first step, and then applying a "softer" dynamic plastic deformation treatment. Such flexibility may help to optimize the edge treatment, i.e. achieve optimal properties both with respect to edge rounding and superficial microhardness, for example optimized in view of target workpiece material and/or tool diameter.

The process strengthens not only the cutting edges but also improves chipping resistance of other edges of the tool, such as, for example, heels of teeth.

Therefore, according to a non-claimed aspect, this disclosure relates to a general method for treating a metal machining tool comprising an edge, such as a cutting tool comprising a cutting edge. The method comprises first immersing at least a portion of the tool in a bed of granules and effectuating relative movement between the tool and the granules for removing grinding burr and/or creating an initial edge rounding at the edge. Thereafter, at least a portion of the tool is exposed to a dynamic plastic deformation treatment and/or a treatment for increasing microhardness, to cause a local increase of superficial microhardness and/or an increased edge rounding magnitude at the edge.

Optionally, such method may include the further step of immersing at least a portion of the tool in a bed of granules and effectuating relative movement between the tool and the granules for removing flaking particles on the surface of the tool. Thereby, the surface of the tool will become smooth and better prepared for coating deposition as discussed above with reference to a thread cutting tap. Accordingly, the method may also comprise a coating deposition step for applying a coating that covers at least a portion of the tool.

A tool treated in this way will have improved tool life due to lack of burr, optimal edge rounding and/or increased superficial microhardness.

### BRIEF DESCRIPTION OF DRAWINGS

In the following, example embodiments will be described in greater detail and with reference to the accompanying drawings, in which:
Fig. 1 shows a thread cutting tap according to an embodiment of the invention.
Fig. 2 illustrates a part of a thread cutting portion of the tap illustrated in fig. 1, wherein the chamfered section and a part of the full profile section are shown.
Fig. 3 is a magnified view of one of the cutting teeth of the thread cutting tap.
Fig. 4 is a cross sectional view of the primary cutting edge of the tooth as indicated in fig. 3.
Fig. 5 illustrates a method for treatment of a thread cutting tap according to the invention.
Fig. 6 illustrates an example of a first step of the method wherein a thread cutting tap is immersed in a bed of granules and moved in relation thereto.
Figs. 7-8 illustrate an example of a second step of the method wherein the thread cutting tap is exposed to a dynamic plastic deformation treatment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

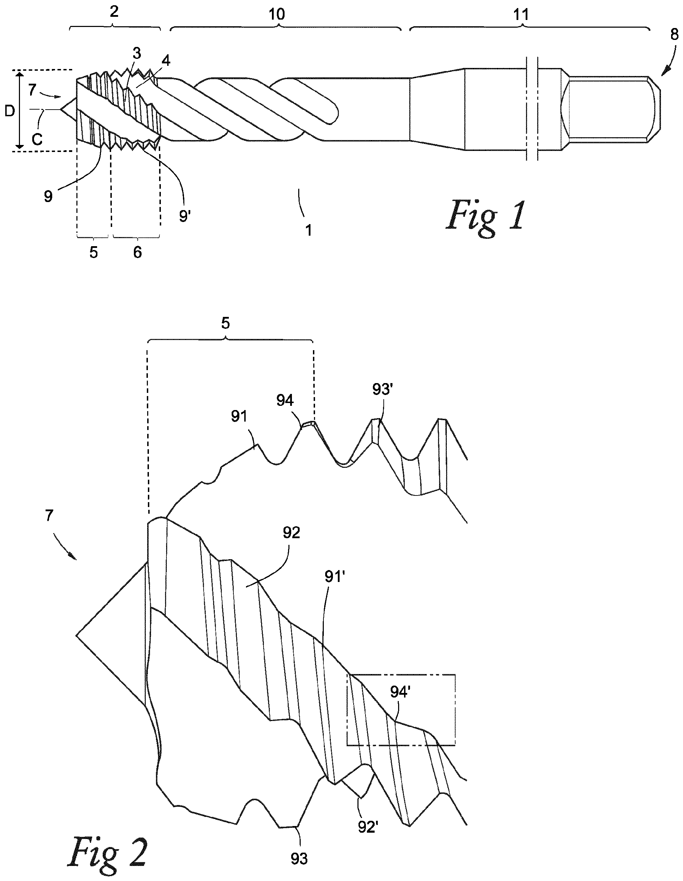

Fig. 1 illustrates a thread cutting tap 1 made of high speed steel, having a front end 7 and a rear end 8. The thread cutting tap extends along a longitudinal axis C from the front end 7 to the rear end 8. The thread cutting tap comprises a thread cutting portion 2, a neck portion 10, and a shank portion 11. The thread cutting portion includes a chamfered section 5 extending from the front end 7, and a full profile section 6 extending from the chamfered section 5 to the neck 10. Moreover, the thread cutting portion has three cutting lands 3 and three flutes 4 extending along a helical path around the longitudinal axis C. Each cutting land 3 comprises a plurality of thread cutting teeth 9, 9'. The thread cutting teeth 9 in the chamfered section 5 can be considered as teeth of which, in a direction towards the front end, increasingly large portions of the tip has been cut off. Accordingly, the major part of the material that is cut away when threading a hole in a workpiece is removed by the teeth 9 in the chamfered section and the first thereupon following tooth 9' in the full profile section 6. The remaining teeth 9' in the full profile section 6 will mainly create an accurate and smooth surface of the thread, but not remove any significant amount of workpiece material. Some teeth 9' in the full profile section 6, in particular teeth close to the rear end of the cutting portion, may not be involved much at all in the cutting process since the thread cutting portion 2 may be back tapered starting from the first full profile tooth, creating a slight radial relief in the threads. Thus, the teeth 9' in the full profile section 6 has a profile corresponding to the thread to be cut, but all these teeth are not necessarily located on the same radial distance from the longitudinal axis.

The thread cutting tap according to this example embodiment has a major diameter D of 8 mm (i.e. for cutting an M8 thread according to the ISO 68-1 standard).

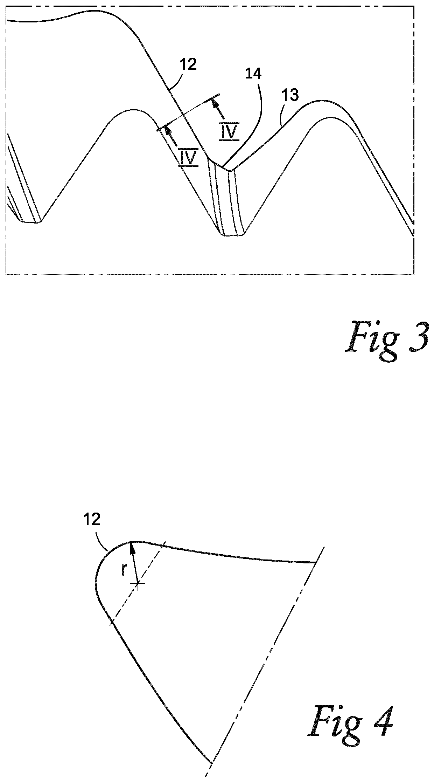

Fig. 2 shows a part of the cutting portion 2 in more detail, including the chamfered section 5 and a part of the full profile section 6. As best seen in fig. 3 - which is an enlarged view of one of the teeth as indicated in fig. 2 - each tooth includes a primary cutting edge 12 and a secondary cutting edge 13 as well as a crest edge 14. The chamfered section 5 transitions into the full profile section 6 at an axial location at which the crest edge 14 has obtained a final width corresponding to the crest width of the thread to be machined. According to the embodiment illustrated in fig. 2, this transition is located somewhere between the last tooth 94 in the chamfered section 5 and the first tooth 91' in the full profile section 6. That is, of the teeth 91'- 94' that all have the same crest edge width corresponding to the thread profile to be cut, the tooth 91' is the tooth being located closest to the front end 7, and is therefore considered as the first tooth in the full profile section 6. Fig. 4 is a cross section perpendicular to the primary cutting edge, as indicated in fig. 3, and thus illustrates the edge rounding r of the primary cutting edge.

In the embodiment illustrated in figs. 1-4, a subset of the teeth 9, 9' are formed by all the teeth 91-94 in the chamfered section as well as the teeth 91'-93' in the full profile section for which all teeth axially forward thereof in the respective cutting land is in the chamfered section. In other words, for each cutting land, the first tooth in the full profile section 6 is included in the subset. In this example, the primary cutting edges 12 of the teeth 91-94, 91'-93' in the subset have an average edge rounding of a magnitude of 14.5 µm, as measured using Alicona Infinite Focus optical 3D measurement equipment, and an average superficial microhardness of about 1000 HK0.3, as measured using Knoop equipment with minimal distance from the surface based on requirements of SS-EN ISO 4545-1:2018. The primary cutting edges 12 of the remaining teeth 94'... have an average edge rounding of approximately 11 µm and an average superficial microhardness of approximately 935 HK0.3. Thus, according to this example, the second edge rounding magnitude is approximately 32% greater than the first edge rounding magnitude, and the second superficial microhardness is approximately 7% greater than the first superficial microhardness.

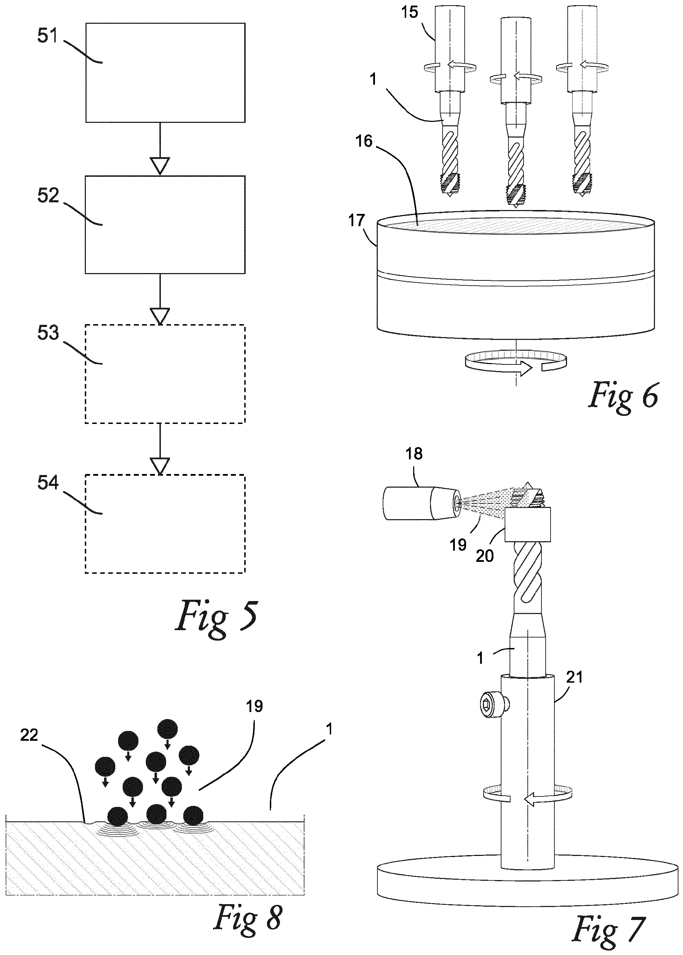

In the following, with reference to fig. 5, a method for treatment of a thread cutting tap is described.

In step 51, the cutting portion of a thread cutting tap is immersed in a bed of granules, and a relative movement between the thread cutting tap and the granules is effectuated. The treatment is performed such that grinding burr is removed and the edges of the thread cutting teeth, and in particular the primary cutting edges, obtain an edge rounding of a first magnitude. For example, a machine as schematically illustrated in fig. 6 may be used. Using this machine, a plurality of thread cutting taps 1, clamped by independently rotatable holders 15, are immersed in a bed of granules 16 located in a rotatable container 17 (although the taps 1 are shown in an elevated state in fig. 6, e.g. before being lowered into the container 17). The movement of the thread cutting taps 1 with respect to the granules 16 is achieved by rotating both the taps 1 and the container 17. The rotation directions may change between clockwise and counter-clockwise during one treatment cycle. As an example, the container rotation direction may be the same during the treatment cycle, while the rotation direction of the tool is changed multiple times. The tool and the container preferably rotate in opposite directions during at least part of the treatment cycle.

In step 52, a subset of the thread cutting teeth of the thread tap is exposed to a dynamic plastic deformation treatment. The treatment is performed such that the edges of the thread cutting teeth in the subset, and in a particular the primary cutting edges, obtains an edge rounding of a second magnitude which is greater than the first magnitude. For example, a dry blasting machine as schematically illustrated in fig. 7 may be used, in which a dry blasting gun 18 is used for bombarding a part of the thread cutting portion (corresponding to the subset of thread cutting teeth that is to be treated) with particles 19 in a stream of air. A mask 20 is used to cover the thread cutting teeth that are not in the subset, such that only the teeth in the subset are exposed to the blasting. A rotatable holder 21 is used for rotating the thread cutting tap 1 such that the blasting will be evenly distributed over the treated surface, i.e. such that the cutting edges of each tooth in the subset will be exposed to similar treatment. The subset includes at least all thread cutting teeth in the chamfered section of the thread cutting tap. In the example illustrated in fig. 7, the first tooth in each thread cutting land axially rearwards of the chamfered section, i.e. teeth corresponding to one spiral revolution in the full profile section, is included in the subset and thus exposed to the treatment.

For clarity, fig. 7 illustrates the mask 20 as covering only a part of the thread cutting portion, namely the part corresponding to the cutting teeth that are not intended to be included in the subset. However, the mask 20 may be longer, covering the whole neck and shank of the thread cutting tap, and for example supported by the tool holder 21, such that only the top of the thread cutting tap will be positioned outside of the mask.

Due to difficulties of achieving a tight fit and an exact positioning of the mask at the thread cutting portion, the border between blasted and non-blasted areas may not be too precise. Thus, according to an alternative embodiment, with reference also to fig. 2, the first teeth 91'-93' in the full-profile section may not have obtained an edge rounding of the second magnitude, despite not being intentionally covered by the mask 20, and are therefore not included in the subset. In such case, the first teeth 91'-93' in the full-profile section may be considered as transition teeth between the treated teeth in the subset and the non-treated teeth. Accordingly, in such alternative embodiment, all teeth 91-94 in the chamfered section will have obtained an edge rounding of the second magnitude, and are thus included in the subset, whereas the teeth 91'... in the full-profile section are not included in the subset. The majority of the teeth 91'... in the full-profile section will have an edge rounding of the first magnitude, even though the first teeth 91'-93' in the full-profile section, i.e. the transition teeth, may have an edge rounding somewhere between the first and the second magnitude.

Fig. 8 is a magnified view schematically illustrating the impact from the particles 19 when hitting the surface of the thread cutting tap 1, resulting in plastic deformation 22 on the surface. The particles 19 are shown as spherical, but may also have various other shapes.

In optional step 53, the cutting portion of the thread cutting tap is once again immersed in a bed of granules, for example using a machine as illustrated in fig. 6. This time, however, the process parameters are selected such that the treatment is softer and has a polishing effect by removing flaking particles and other material that is partly loose or protruding from the surface, but without affecting the overall geometry. In particular, the treatment may be performed such as to not change the edge rounding of any cutting edge, at least not to an extent having any significance, or even possible to measure. Even if the edge rounding magnitudes would be affected, the difference between the respective edge rounding magnitudes of the cutting edges on the teeth in the subset and on the other teeth, would remain.

In optional step 54, the thread cutting tap 1, or the thread cutting portion 2 thereof, is coated. Post-coating-processing may also be applied. A coating applied to the thread cutting tap may change the respective edge rounding magnitudes. Nevertheless, the relationship between the edge rounding magnitudes is preferably not changed, i.e. the edge rounding magnitude of the primary cutting edges of the teeth in the subset is still greater than the edge rounding magnitude of the primary cutting edges of the other teeth.

According to an example embodiment, a thread cutting tap with the properties described with reference to figs. 1-4 was obtained using the method as described with reference to fig. 5, as follows.

First, a treatment as described with reference to fig. 6 was applied, in which the bed of granules included a mixture of SiC (212 µm) and walnut shell granulate (0.8-1.4 mm) as abrasive media. Each thread cutting tap 1 was held in a holder 15 rotated with a spindle rotation speed of 2000 rpm repeatedly changing between clockwise and counter-clockwise rotation directions for intervals of 2 seconds, while the container was rotated counter-clockwise at a speed of 70 rpm for a total cycle time of 80 seconds.

Secondly, a treatment as described with reference to fig. 7 was applied. The blasting media was ZrO₂ with particle size of 70-120 µm at a pressure of 1 bar and a treatment time of 5 seconds, wherein the blasting gun was directed at a 90° angle to the longitudinal axis of the thread cutting tap, at a distance of 30 mm therefrom, and wherein the thread cutting tap was rotated at 10000 rpm.

Thirdly, a treatment as described with reference to fig. 6 was applied again, with a similar process as used during the first treatment step, but now with a total cycle time less than 60 seconds.

Tests were made in which a thread cutting tap treated according to the above (and thus having, before coating, first and second edge rounding magnitudes of 11 µm and 14.5 µm, respectively, and first and second superficial microhardness of 935 HK0.3 and 1000 HK0.3, respectively) and coated with TiAlN coating was compared to a reference tap with the same coating but produced by using a standard method comprising manual deburring followed by edge rounding by wet blasting using glass beads. Both taps were used for threading 16 mm long holes in plates of Impax Supreme steel (283-311 HB), with a threading speed of 15 m/min, using external coolant supply. A standard go/no go gauge was used to determine tool life. In this test, the number of threaded holes reached by the reference tap before failing the go/no go gauge test was 405, whereas the corresponding number for the tap treated in accordance with the invention was 1050. Hence, the tap according to the invention was found to have approximately 2.6 times longer tool life than the reference tap.

## Claims

1. Method for treatment of a thread cutting tap (1), the thread cutting tap comprising a thread cutting portion (2) including a plurality of cutting lands (3) separated by flutes (4), wherein the thread cutting portion (2) comprises a chamfered section (5) extending from a front end (7) of the thread cutting tap (1) to a full profile section (6) extending from the chamfered section (5) towards a rear end (8) of the thread cutting tap (1), wherein each cutting land (3) comprises one or more thread cutting teeth (9) in the chamfered section (5) and a plurality of thread cutting teeth (9') in the full profile section (6), each thread cutting tooth (9, 9') including a primary cutting edge (12), wherein the method comprises first
- immersing at least the thread cutting portion (2) of the thread cutting tap (1) in a bed of granules and effectuating relative movement between the thread cutting portion (2) and the granules for removing grinding burr and generating an edge rounding of a first magnitude at the primary cutting edge (12) of each thread cutting tooth (9, 9'); and then
- exposing a subset of the thread cutting teeth (9, 9') to a dynamic plastic deformation treatment, the subset including at least all the thread cutting teeth (9) in the chamfered section (5), such as to generate an edge rounding of a second magnitude, greater than the first magnitude, at the primary cutting edge (12) of each thread cutting tooth in the subset.

2. Method according to claim 1, wherein the subset includes, for each cutting land, at least the one thread cutting tooth in the full profile section being closest to the chamfered section.

3. Method according to any of the previous claims, wherein the subset includes at most half of the teeth in the full profile section.

4. Method according to any of the previous claims, wherein the method further comprises a subsequent step of immersing at least the thread cutting portion of the thread cutting tap in a bed of granules and effectuating relative movement between the thread cutting portion and the granules for removing flaking particles on the surface of the thread cutting portion.

5. Method according to any of the previous claims, wherein the method further comprises a subsequent step of coating at least the thread cutting portion of the thread cutting tap.

6. Method according to any of the previous claims, wherein the dynamic plastic deformation treatment comprises a process in which particles are propelled in a stream of liquid, vapor or air towards the cutting teeth in the subset.

7. Method according to claim 6, wherein the particles are nonabrasive.

8. Thread cutting tap (1) comprising a thread cutting portion (2) including a plurality of cutting lands (3) separated by flutes (4), wherein the thread cutting portion (2) comprises a chamfered section (5) extending from a front end (7) of the thread cutting tap (1) to a full profile section (6) extending from the chamfered section towards a rear end (8) of the thread cutting tap (1), wherein each cutting land (3) comprises one or more thread cutting teeth (9) in the chamfered section and a plurality of thread cutting teeth (9') in the full profile section, each thread cutting tooth including a primary cutting edge (12), **characterized in that** a plurality of the thread cutting teeth (9, 9') are included in a cutting teeth subset comprising at least all the thread cutting teeth (9) in the chamfered section, and wherein the primary cutting edges (12) of the majority of the thread cutting teeth that are not included in the subset have an edge rounding of a first magnitude and a first superficial microhardness, and the primary cutting edges (12) of the thread cutting teeth (9, 9') included in the subset have an edge rounding of a second magnitude and a second superficial microhardness, and wherein the second magnitude and second superficial microhardness are greater than the first magnitude and the first superficial microhardness, respectively.

9. Thread cutting tap according to claim 8, wherein the thread cutting tap is made of high speed steel.

10. Thread cutting tap according to any of the claims 8-9, wherein the second edge rounding magnitude is 20-50% greater than the first edge rounding magnitude.

11. Thread cutting tap according to any of the claims 8-10, wherein:
- the first edge rounding magnitude is between 4.5 µm and 14 µm, and
- the second edge rounding magnitude is between 5.5 µm and 21 µm.

12. Thread cutting tap according to any of the claims 8-11, wherein the second superficial microhardness is at least 3% greater than the first superficial microhardness.

13. Thread cutting tap according to any of the claims 8-12, further comprising a coating covering at least the thread cutting portion.
